# EUROPEAN PATENT SPECIFICATION

(11) **EP 2 825 820 B1**
(45) Date of publication and mention of the grant of the patent: **03.01.2018**
(21) Application number: 13718394.3
(22) Date of filing: 06.03.2013
(51) Int. Cl.: F21V 5/00, F21V 11/00, F21V 13/04, F21V 14/06, F21Y 105/00, F21Y 115/10, F21Y 115/15

(54) **REMOTE BEAM SHAPING**
FERNE STRAHLFORMUNG
FACONNAGE À DISTANCE DE FAISCEAU

(30) Priority: 12.03.2012 US 201261609506 P
(43) Date of publication of application: 21.01.2015
(73) Proprietor: Philips Lighting Holding B.V., 5656 AE Eindhoven (NL)
(72) Inventor: MURDOCH, Michael John, NL-5656 AE Eindhoven (NL)
(74) Representative: van Eeuwijk, Alexander Henricus Waltherus
(86) International application number: PCT/IB2013/051770
(87) International publication number: WO 2013/136228

(56) References cited:
- EP-A1- 2 230 446
- EP-A2- 1 384 941
- WO-A1-2007/080543
- WO-A1-2008/129438
- WO-A2-2007/007271
- WO-A2-2007/036871
- WO-A2-2009/013695
- DE-A1-102009 060 566
- KR-A- 20090 106 024
- US-A- 5 980 066
- US-A1- 2003 117 797
- US-A1- 2006 176 696
- US-A1- 2008 137 345
- US-A1- 2010 195 330

## Description

### FIELD OF THE INVENTION

The present invention generally relates to the field of lighting. Specifically, the present invention relates to a lighting system capable of modifying a portion of a light field emitted by a light-emitting module providing a light field having a predefined uniformity of directionality.

### BACKGROUND OF THE INVENTION

It is possible to provide light having a uniform light field with respect to directionality of light rays of the light field in a location such as a room using an appropriate light source or appropriate light sources. Such light may be useful in several applications including, for example, office or retail lighting. However, in some circumstances in such applications, such a light field may be too uniformly directional for certain tasks to be performed conveniently and/or efficiently. This maybe alleviated by modification of the light source or by providing additional light sources.

DE 10 2009 060 566 A1 discloses a lamp comprising LEDs arranged on a circuit board, collimating optics and tertiary optics.

### SUMMARY OF THE INVENTION

In some cases, the uniformly directional light field may have a relatively small cross-section, for example such as the beam of light emitted by a spot light. In such cases, the light field may be desired to be scattered or spread out, in effect creating a diverging light field.

In view of the above discussion, a concern of the present invention is to provide a lighting system that has an increased adaptability with regards to operation under different requirements and/or in different applications compared to known lighting systems.

A further concern of the present invention is to provide a lighting system comprising a light-emitting module adapted to emit a light field having a predefined uniformity of directionality, which lighting system may alleviate or eliminate the problem of the light field emitted by the light-emitting module being too uniform in directionality for certain tasks to be performed conveniently and/or efficiently.

To address at least one of these concerns and other concerns, a lighting system in accordance with the independent claim is provided. Preferred embodiments are defined by the dependent claims.

According to a first aspect of the present invention, there is provided a lighting system comprising a light-emitting module and an optical element. The light-emitting module is adapted to emit a light field having a predefined uniformity of directionality. The optical element is arranged so as to receive a portion of the light field emitted by the light-emitting module and configured to output a modified light field based on the received light field. The optical element is separately arranged with respect to the light-emitting module and configured to modify the light field input into the optical element, such that light field output from the optical element has a changed uniformity of directionality with respect to the light field emitted by the light-emitting module.

By the optical element being separately arranged with respect to the light-emitting module and being configured to modify the light field input into the optical element such that light field output from the optical element has a changed uniformity of directionality with respect to the light field emitted by the light-emitting module, the light field emitted by the light-emitting module may for example be focused or converged and/or redirected so as to produce a desired illumination pattern, e.g. so as to produce a spot light effect.

Hence, even in a case where a light-emitting module providing a light field having a substantially or completely uniform directionality is used, light field provided by the light-emitting module may for example be focused or converged and/or redirected by the optical element so as to produce a desired illumination pattern, e.g., so as to comply with an user and/or application requirement.

By the optical element being separately arranged with respect to the light-emitting module, modification of the portion of the light field emitted by the light-emitting module to change uniformity of directionality of the light field emitted by the light-emitting module for subsequent illumination of a scene or location may be done without need for modifying the light-emitting module itself.

In the following, principles of operation of the lighting system according to one example are described.

By the optical element being arranged so as to receive a portion of the light field emitted by the light-emitting module, the optical element may intercept a portion of the light field emitted by the light-emitting module. Thereby, a shadowed region or area may be produced on a surface being illuminated by the lighting system. However, by the optical element being configured to modify the light field input into the optical element, most, some, or even all of the light field input into the optical element may then be, e.g., focused or redirected into a portion of the shadowed region. For example, by means of the lighting system a surface to be illuminated may be uniformly illuminated except where the optical element has its "effect", where according to one example a dark annulus surrounding a brighter spot may be produced on the illuminated surface. Hence, the illumination intensity may be redistributed on the illuminated surface by means of the optical element. Such an effect may be useful for example in spot lighting in retail lighting applications. With reference to the above example, the dark annulus may make the spot appear relatively brighter by increasing the contrast, which would bring more visual attention to the spotlighted object or region.

The optical element may be a passive device, i.e. non-powered.

According to one example, the optical element is substantially smaller in size compared to the light-emitting module.

In the context of the present application, by the optical element being separately arranged from the light-emitting module it is meant that the optical element is not mechanically coupled to the light-emitting module, i.e. that there is a spatial separation between the optical element and the light-emitting module.

The lighting system may comprise more than one optical element.

In some applications, the lighting system may comprise a plurality of optical elements, where each optical element is arranged so as to receive a portion of the light field emitted by the light-emitting module and configured to output a modified light field based on the received light field.

The portion of the light field emitted by the light-emitting module that is received by the optical element may for example be smaller than about half of the light field emitted by the light-emitting module.

By the portion of the light field emitted by the light-emitting module that is received by the optical element being smaller than the light field emitted by the light-emitting module, it may be meant that a cross section of the collection or bundle of light rays comprised in the portion of the light field emitted by the light-emitting module that is received by the optical element is smaller than a cross section of the collection or bundle of light rays comprised in the light field emitted by the light-emitting module. For example, the portion of the light field emitted by the light-emitting module that is received by the optical element may have a cross section that is smaller than about half of a cross section of the light field emitted by the light-emitting module.

The optical element may be arranged so as to be movable with respect to the light-emitting module. Hence, the optical element may be positioned and repositioned as needed for modifying the light field input into the optical element such that light field output from the optical element has a changed uniformity of directionality with respect to the light field emitted by the light-emitting module, without need for modifying the light-emitting module itself.

The optical element may be configurable with respect to capacity and/or capability of modification of the light field input into the optical element. For example, the optical element may be configurable such that different illumination patterns of light field output by the optical element, including for example a spot light pattern, may be achieved.

The light-emitting module may comprise a plurality of light sources.

The plurality of light sources may for example comprise a plurality of light-emitting diodes (LEDs). The plurality of light sources may for example be arranged in an array or be arranged so as to form a grid.

The light-emitting module and/or the plurality of light sources may for example comprise at least one organic light-emitting diode (OLED).

The lighting system may comprise a collimation element adapted to collimate the light field emitted by the light-emitting module. Such a collimation element may for example comprise an optical film or layer.

Alternatively or optionally, each light source of the plurality of light sources may comprise a collimation element adapted to collimate the light field emitted by the light source.

The collimation element may constrain the directionality of the light field emitted by the respective light source or by the light sources. By such a configuration, the light field modifying effect of the optical element may be enhanced or increased. For example, by increasing collimation of the light field from each light source of the plurality of light sources, the focusing by the optical element may become more precise. An extreme, ideal example is where the plurality of light sources produces a plurality of parallel or substantially parallel light rays.

Each light source of the plurality of light sources may comprise an output surface via which a light field is emitted from the light source.

The collimation element of each light source may be configured to collimate light emitted by the light source such that a beam of light or light ray leaving the collimation element exhibits an angle in relation to a normal of the output surface that is below 45°, or below 10°, for example an angle in relation to a normal of the output surface that is 8°.

Allowing for only a limited degree of collimation to be performed by the collimators may be desirable since the extreme, ideal example where the plurality of light sources produce a plurality of parallel or substantially parallel light rays may enhance any optical defects, spatial displacement errors, dispersion, etc., associated with the light sources.

Modeling has indicated that configuring the collimation element of each light source to collimate light emitted by the light source such that a beam of light leaving the collimation element exhibits an angle in relation to a normal of the output surface that is about 8° may be particularly beneficial with regards to enhancement or increase of light field modifying effect of the optical element.

The light-emitting module may be adapted to emit a light field such that the light rays comprising the light field each has an angle of directionality that differs with respect to the angles of directionality of the other light rays by less than 45°, or even less than 10°.

In other words, the light-emitting module may be adapted to emit a light field having an uniformity of directionality such that an angular difference between the directions of light rays comprising the light field is less than 45°, or less than 10°.

The optical element may comprise at least one refractive element. The at least one refractive element may for example comprise a lens, such as a biconvex or planoconvex lens or a Fresnel lens or the like, or a prism or another rectilinear object.

The lens may for example be made of or comprise glass, plastic, water included a transparent vessel made of plastic or glass, and/or any similar optical material with an index of refraction exceeding the index of refraction of air and with sufficient transparency so as to not absorb too much of light. Such a lens could have a number of different shapes, e.g., the lens could be round, elliptical, cylindrical, etc., depending on the desired focal pattern. A cylindrical lens may be particularly useful for example in order to provide an oblong focal pattern rather than a circular spot that a round lens would provide.

The refractive prism or other rectilinear object may be made of same or similar material or materials as a lens described in the foregoing.

The optical element may be configured to modify the light field input into the optical element such that light field output from the optical element has a predefined intensity and/or irradiance distribution. To this end, the optical element may for example comprise a refractive 'free-shape' configured to cause a predefined beam shape and intensity and/or irradiance distribution of light field output from the optical element.

The optical element may comprise a wavelength-selective element configured to modify the light field that is input into the optical element such that light field output from the optical element is such that the spectral power distribution of the light field is attenuated with respect to wavelength in a predefined manner. Such a wavelength-selective element may be used, e.g., to reduce output of light from the optical element being in the infrared wavelength range.

The optical element may comprise an anti-reflective element. Such an anti-reflective element may for example comprise anti-reflective coating applied to a surface of the optical element. Such an anti-reflective element may reduce or eliminate occurrence of specular reflections and/or reduce or eliminate occurrence of undesired reflections, e.g. in undesired directions with respect to the optical element.

Alternatively or optionally, the optical element may comprise a reflective surface portion, e.g. a surface portion coated with a reflective coating, or a reflective element.

The lighting system may comprise mounting means adapted to releasably mount the optical element at a location or in a position so as to receive the portion of the light field emitted by the light-emitting module.

For example, such mounting means may comprise means for suspending the optical element from the ceiling in a room, means for mounting the optical element above the working space of a desk in an office, and/or means for attaching the optical element to a wall in a room.

According to another example, the mounting means may be adapted to releasably mount the optical element to the surface, housing, and/or structure of the light-emitting module.

The mounting means may exhibit portability and/or reconfigurability functions, e.g. by means of provision of a spring-loading arrangement, similar to a springloaded desk lamp arm, that may be capable of controllably positioning and repositioning the optical element to the desired location.

The lighting system may comprise an envelope that is removably arrangeable on the optical element so as to at least partially surround the optical element.

The envelope may be configured to impede light from reaching the optical element when the envelope is arranged on the optical element. Light may also be impeded from leaving the optical element by the envelope when the envelope is arranged on the optical element.

The envelope may for example comprise an opaque or semitransparent film or layer that can be applied to a surface of the optical element. Such an envelope may be beneficial for preventing undesired operation of the optical element for example during handling, installation and/or transportation of the optical element and/or lighting system.

According to a second aspect of the present invention, there is provided an optical element adapted to be included in a lighting system according to the present invention. The optical element is arrangeable so as to receive a portion of the light field emitted by the light-emitting module included in the lighting system and output a modified light field based on the received light field.

In the context of the present application, by a 'light field' it is meant a collection and/or bundle of light rays in space, each of which light rays has a starting point, direction, intensity, and spectral power distribution.

In the context of the present application, by uniformity of directionality it is meant a similarity of the directions of the individual light rays in the collection of light rays in the light field.

For example, by a light field being uniform in directionality, it is meant a light field comprised by light rays that each has an angle of directionality that differs with respect to the angles of directionality of the other light rays by less than a predefined angle, e.g. less than 45°, or even less than 10°.

An extreme example of a light field being uniform in directionality is where the light rays of the light field are parallel or substantially parallel with respect to each other.

Further objects and advantages of the present invention are described in the following by means of exemplifying embodiments.

It is noted that the present invention relates to all possible combinations of features recited in the claims. Further features of, and advantages with, the present invention will become apparent when studying the appended claims and the following description. Those skilled in the art realize that different features of the present invention can be combined to create embodiments other than those described in the following.

### BRIEF DESCRIPTION OF THE DRAWINGS

Exemplifying embodiments of the invention will be described below with reference to the accompanying drawings, in which:
Fig. 1 is a schematic block diagram of a lighting system according to an embodiment of the present invention;
Fig. 2 is a schematic side view of a light-emitting module included in a lighting system according to an embodiment of the present invention;
Fig. 3 is a schematic block diagram of a lighting system according to an embodiment of the present invention; and
Fig. 4 is a schematic block diagram of a lighting system according to an embodiment of the present invention.

In the accompanying drawings, the same reference numerals denote the same or similar elements throughout the views.

### DETAILED DESCRIPTION

The present invention will now be described more fully hereinafter with reference to the accompanying drawings, in which exemplifying embodiments of the present invention are shown. The present invention may, however, be embodied in many different forms and should not be construed as limited to the embodiments set forth herein; rather, these embodiments are provided by way of example so that this disclosure will convey the scope of the invention to those skilled in the art. Furthermore, like numbers refer to like or similar elements or components throughout.

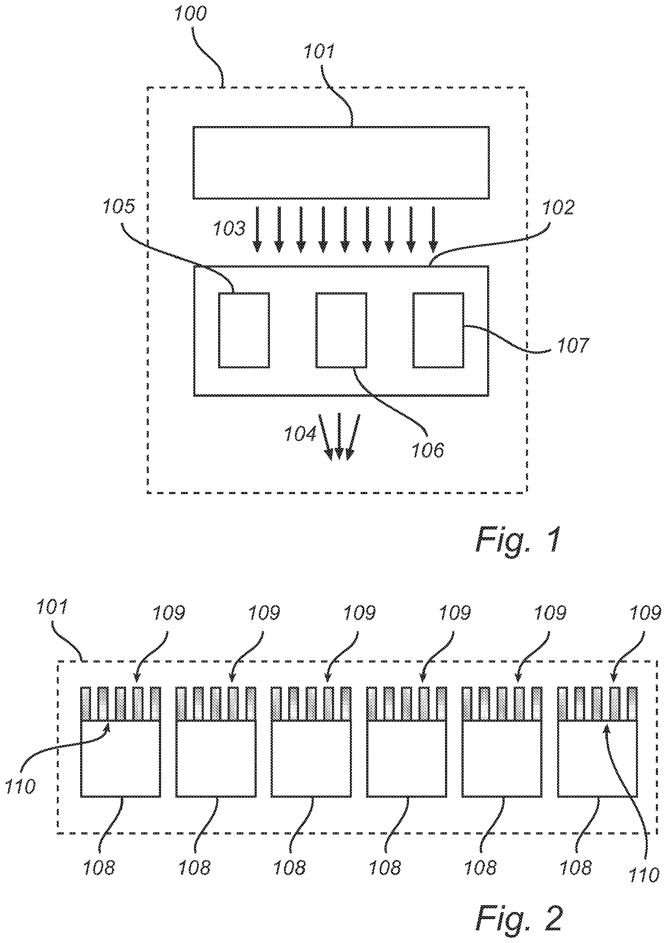

Referring now to Fig. 1, there is shown a schematic block diagram of a lighting system 100 according to an embodiment of the present invention. The lighting system 100 comprises a light-emitting module 101 and an optical element 102.

The light-emitting module 101 is adapted to emit a light field 103 having a predefined uniformity of directionality. The optical element 102 is arranged so as to receive a portion of the light field 103 emitted by the light-emitting module 101, and is further configured to output a modified light field 104 based on the received light field 103.

In Fig. 1, only the portion of the light field 103 emitted by the light-emitting module 101 that is received by the optical element 102 is depicted, and not the entire light field emitted by the light-emitting module 101.

The sizes of block 101 representing the light-emitting module and block 102 representing the optical element in Fig. 1 are not to scale. The optical element 102 may be substantially smaller than the light-emitting module 101.

The light field 103 and the light field 104 are indicated only schematically in Fig. 1 by respective arrows 103 and 104.

The optical element 102 is separately arranged with respect to the light-emitting module 101 and configured to modify the light field 103 input into the optical element 102 such that light field 104 output from the optical element 102 has a changed uniformity of directionality with respect to the light field 103 emitted by the light-emitting module 101, i.e. such that light field 104 output from the optical element 102 has a changed uniformity of directionality compared with the uniformity of directionality of the light field being emitted by the light-emitting module 101.

According to the embodiment depicted in Fig. 1, the optical element 102 is adapted to make the light field 103 more focused or convergent, resulting in light field 104.

According to the embodiment depicted in Fig. 1, the optical element 102 comprises a refractive element 105, a wavelength-selective element 106 configured to modify the light field 103 input into the optical element 102 such that the spectral power distribution of the light field 103 is attenuated with respect to wavelength in a predefined manner. For example, by the wavelength-selective element 106 the light rays comprising the light field 104 may each have a wavelength being within a predefined wavelength range. The optical element 102 comprises an anti-reflective element 107.

Each of the refractive element 105, wavelength-selective element 106 and anti-reflective element 107 is optional. The optical element 102 may comprise one or more of the refractive element 105, the wavelength-selective element 106 and the anti-reflective element 107.

Alternatively or optionally, the light-emitting module 101 may comprise at least one organic light-emitting diode (OLED). OLEDs may be particularly advantageous because they may emit light from an extended area.

Referring now to Fig. 2, there is shown a schematic side view of a light-emitting module 101 included in a lighting system (not shown in Fig. 2) according to an embodiment of the present invention.

The light-emitting module 101 comprises a plurality of light sources 108. Each of the plurality of light sources 108 comprises a collimation element 109 adapted to collimate the light field emitted by the light source 108. It is to be understood that the number of light sources 108 shown in Fig. 2 is according to an example. In principle, the number of light sources 108 included in the light-emitting module 101 may be any positive integer.

The plurality of light sources 108 may for example comprise a plurality of light-emitting diodes (LEDs), which LEDs for example may be arranged in an array. The plurality of LEDs may for example comprise at least one OLED.

According to the example depicted in Fig 2, each light source 108 comprises an output surface 110 via which light is emitted from the light source 108. Only the output surfaces 110 of some light sources 108 are indicated by reference numerals 110 in Fig. 2. The collimation element 109 of each light source 108 is configured to collimate light emitted by the light source 108 such that a beam of light leaving the collimation element 109 exhibits an angle in relation to a normal of the output surface 110 that is within a predefined angle range. According to the invention, the predefined angle range is 6°-45°.

It is to be understood that the light-emitting module 101 may comprise components other than those shown in Fig. 2, such as wiring, electrical circuitry, housing, etc. However, such components are not shown in Fig. 2.

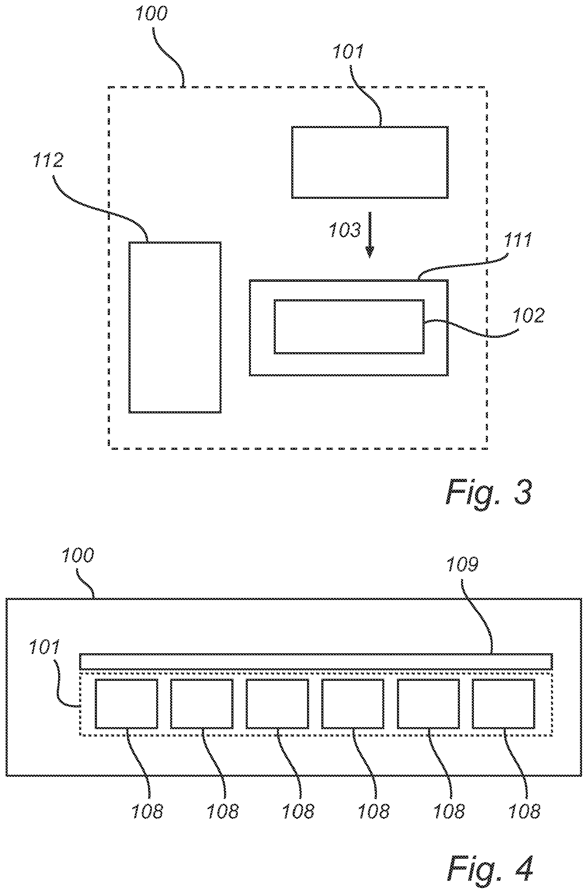

Referring now to Fig. 3, there is shown a schematic block diagram of a lighting system 100 according to an embodiment of the present invention, the lighting system 100 comprising a light-emitting module 101 and an optical element 102.

The components 101 and 102 of the lighting system 100 in Fig. 3 are similar to or the same as the components 101 and 102, respectively, of the lighting system 100 in Fig. 1, and the functions of the components 101 and 102 of the lighting system 100 in Fig. 3 are similar to or the same as the components 101 and 102, respectively, of the lighting system 100 in Fig. 1.

With reference to Fig. 3, the lighting system 100 comprises mounting means 112 adapted to releasably mount the optical element 102 at a location, e.g. in a desired position in a room, so as to receive the portion of the light field 103 emitted by the light-emitting module 101, indicated schematically in Fig. 3 by the single arrow.

The mounting means 112 is only schematically shown in Fig. 3. The mounting means 112 may for example comprise means for suspending the optical element from the ceiling in the room, means for mounting the optical element above the working space of a desk in the room, and/or means for attaching the optical element to a wall in the room.

With further reference to Fig. 3, the lighting system 100 comprises an envelope 111 that is removably arrangeable on the optical element 102 so as to at least partially surround the optical element 102. In Fig. 3 the situation where the envelope 111 is arranged on the optical element 102 is indicated. When arranged on the optical element 102, the envelope 111 is configured to impede light from reaching the optical element 102.

Each of the mounting means 112 and envelope 111 is optional. The lighting system 100 may comprise either one or both of the mounting means 112 and envelope 111.

The sizes of block 101 representing the light-emitting module and block 102 representing the optical element in Fig. 3 are not to scale. The optical element 102 may be substantially smaller than the light-emitting module 101.

Referring now to Fig. 4, there is shown a schematic side view of a light-emitting module 101 included in a lighting system 100 according to an embodiment of the present invention.

The light-emitting module 101 comprises a plurality of light sources 108.

The lighting system 100 comprises a collimation element 109 adapted to collimate the light field emitted by the light-emitting module 101.

The resulting light field may be such that the light rays comprising the light field each has an angle of directionality that differs with respect to the angles of directionality of the other light rays by less than 45°, or even less than 10°.

It is to be understood that the number of light sources 108 shown in Fig. 4 is according to an example. In principle, the number of light sources 108 included in the light-emitting module 101 may be any positive integer.

The lighting system 100 comprises an optical element (not shown in Fig. 4), for example one such as has been described in the foregoing with reference to Fig. 1 or 3.

In conclusion, a lighting system is disclosed. The lighting system comprises a light-emitting module adapted to emit a light field having a predefined uniformity of directionality and an optical element arranged so as to receive a portion of the light field emitted by the light-emitting module and configured to output a modified light field based on the received light field. The optical element is separately arranged with respect to the light-emitting module and configured to modify the light field input into the optical element such that light field output from the optical element has a changed uniformity of directionality with respect to the light field emitted by the light-emitting module. An optical element adapted to be included in the lighting system is also disclosed.

While the present invention has been illustrated and described in detail in the appended drawings and the foregoing description, such illustration and description are to be considered illustrative or exemplifying and not restrictive; the present invention is not limited to the disclosed embodiments. Other variations to the disclosed embodiments can be understood and effected by those skilled in the art in practicing the claimed invention, from a study of the drawings, the disclosure, and the appended claims. The mere fact that certain measures are recited in mutually different dependent claims does not indicate that a combination of these measured cannot be used to advantage. Any reference signs in the claims should not be construed as limiting the scope.

## Claims

1. A lighting system (100) comprising:
a light-emitting module (101) adapted to emit a light field (103) having a predefined uniformity of directionality of individual light rays in the collection of light rays in the light field; and
an optical element (102) arranged so as to receive a portion of the light field emitted by the light-emitting module and configured to output a modified light field (104) based on the received light field;
wherein the optical element is separately arranged with respect to the light-emitting module and configured to modify the light field input into the optical element such that light field output from the optical element has a changed uniformity of directionality of individual light rays in the collection of light rays in the light field output from the optical element with respect to the light field emitted by the light-emitting module;
wherein the light-emitting module comprises a plurality of light sources (108), and wherein each light source of the plurality of light sources comprises a collimation element (109) adapted to collimate the light field emitted by the light source,
**characterized in that** the collimation element (109) of each light source (108) is configured to collimate light emitted by the light source (108) such that a beam of light leaving the collimation element (109) exhibits an angle in relation to a normal of the output surface (110) that is within a predefined angle range of 6°-45° such that only a limited degree of collimation is performed by the collimation element.

2. A lighting system according to claim 1, wherein the portion of the light field emitted by the light-emitting module that is received by the optical element is smaller than half of the light field emitted by the light-emitting module.

3. A lighting system according to claim 1 or 2, wherein the optical element is arranged so as to be movable with respect to the light-emitting module.

4. A lighting system according to any one of claims 1-3, wherein the optical element is configurable with respect to capacity and/or capability of modification of the light field input into the optical element.

5. A lighting system according to any one of claims 1-4, wherein the light-emitting module is adapted to emit a light field having an uniformity of directionality such that the angular difference between the directions of light rays comprising the light field is less than 45°, or less than 10°.

6. A lighting system according to any one of claims 1-5, wherein the plurality of light sources comprises a plurality of light-emitting diodes, LEDs.

7. A lighting system according to any one of claims 1-6, wherein the light-emitting module comprises one or more organic light-emitting diodes, OLEDs.

8. A lighting system according to any one of claims 1-7, wherein the optical element comprises at least one refractive element (105).

9. A lighting system according to any one of claims 1-8, wherein the optical element comprises a wavelength-selective element (106) configured to modify the light field input into the optical element such that the spectral power distribution of the light field is attenuated with respect to wavelength in a predefined manner.

10. A lighting system according to any one of claims 1-9, wherein the optical element comprises an anti-reflective element (107).

11. A lighting system according to any one of claims 1-10, further comprising mounting means (112) adapted to releasably mount the optical element at a location so as to receive the portion of the light field emitted by the light-emitting module.

12. A lighting system according to any one of claims 1-11, further comprising an envelope (111) being removably arrangeable on the optical element so as to at least partially surround the optical element, the envelope being configured to impede light from reaching the optical element when the envelope is arranged on the optical element.

## Patentansprüche

1. Beleuchtungssystem (100), umfassend:
ein lichtemittierendes Modul (101), das angepasst ist, ein Lichtfeld (103) zu emittieren, das eine vorbestimmte Gleichförmigkeit der Richtwirkung einzelner Lichtstrahlen bei der Sammlung von Lichtstrahlen in dem Lichtfeld aufweist; und
ein optisches Element (102), das so angeordnet ist, dass es einen Teil des von dem lichtemittierenden Modul emittierten Lichtfelds empfängt und konfiguriert ist, ein modifiziertes Lichtfeld (104) basierend auf dem empfangenen Lichtfeld auszugeben;
wobei das optische Element in Bezug auf das lichtemittierende Modul separat angeordnet und konfiguriert ist, um das in das optische Element eingegebene Lichtfeld so zu modifizieren, dass das von dem optischen Element ausgegebene Lichtfeld eine veränderte Gleichförmigkeit der Richtwirkung einzelner Lichtstrahlen in der Sammlung von Lichtstrahlen in dem von dem optischen Element in Bezug auf das von dem lichtemittierenden Modul emittierte Lichtfeld ausgegebenen Lichtfeld aufweist;
wobei das lichtemittierende Modul eine Mehrzahl von Lichtquellen (108) umfasst, und wobei jede Lichtquelle der Vielzahl von Lichtquellen ein Kollimationselement (109) umfasst, das angepasst ist, das von der Lichtquelle emittierte Lichtfeld zu kollimieren, **dadurch gekennzeichnet, dass** das Kollimationselement (109) jeder Lichtquelle (108) konfiguriert ist, Licht, das von der Lichtquelle (108) emittiert wird, zu kollimieren, sodass ein das Kollimationselement (109) verlassendes Bündel an Licht einen Winkel im Verhältnis zu einer Normalen der Ausgabefläche (110) aufweist, der innerhalb eines vorbestimmten Winkelbereichs von 6°-45° liegt, sodass nur ein begrenzter Kollimationsgrad durch das Kollimationselement durchgeführt wird.

2. Beleuchtungssystem nach Anspruch 1, wobei der Teil des von dem lichtemittierenden Modul emittierten Lichtfelds, das von dem optischen Element empfangen wird, kleiner als die Hälfte des von dem lichtemittierenden Modul emittierten Lichtfelds ist.

3. Beleuchtungssystem nach Anspruch 1 oder 2, wobei das optische Element so angeordnet ist, dass es in Bezug auf das lichtemittierende Modul verschiebbar ist.

4. Beleuchtungssystem nach einem der Ansprüche 1 bis 3, wobei das optische Element in Bezug auf die Kapazität und / oder die Fähigkeit zur Modifizierung des in das optische Element eingegebenen Lichtfelds konfigurierbar ist.

5. Beleuchtungssystem nach einem der Ansprüche 1 bis 4, wobei das lichtemittierende Modul angepasst ist, ein Lichtfeld zu emittieren, das eine Gleichförmigkeit der Richtwirkung aufweist, sodass die Winkeldifferenz zwischen den Richtungen der Lichtstrahlen, die das Lichtfeld umfassen, kleiner als 45° oder kleiner als 10° ist.

6. Beleuchtungssystem nach einem der Ansprüche 1 bis 5, wobei die Mehrzahl von Lichtquellen eine Mehrzahl von Leuchtdioden, LEDs, umfasst.

7. Beleuchtungssystem nach einem der Ansprüche 1 bis 6, wobei das lichtemittierende Modul eine oder mehrere organische Leuchtdioden, OLEDs, umfasst.

8. Beleuchtungssystem nach einem der Ansprüche 1 bis 7, wobei das optische Element mindestens ein lichtbrechendes Element (105) umfasst.

9. Beleuchtungssystem nach einem der Ansprüche 1 bis 8, wobei das optische Element ein wellenlängenselektives Element (106) umfasst, das konfiguriert ist, um das in das optische Element eingegebene Lichtfeld derart zu modifizieren, dass die spektrale Leistungsverteilung des Lichtfelds in einer vorbestimmten Weise in Bezug auf die Wellenlänge gedämpft wird.

10. Beleuchtungssystem nach einem der Ansprüche 1 bis 9, wobei das optische Element ein Antireflexionselement (107) umfasst.

11. Beleuchtungssystem nach einem der Ansprüche 1 bis 10, ferner eine Befestigungseinrichtung (112) umfassend, die angepasst ist, das optische Element lösbar an einer Stelle zu befestigen, um den Teil des von dem lichtemittierenden Modul emittierten Lichtfeldes zu empfangen.

12. Beleuchtungssystem nach einem der Ansprüche 1 bis 11, ferner eine Umhüllung (111) umfassend, die entfernbar an dem optischen Element anordenbar ist, um das optische Element mindestens teilweise zu umgeben, wobei die Umhüllung konfiguriert ist, um zu verhindern, dass Licht das optische Element erreicht, wenn die Umhüllung auf dem optischen Element angeordnet ist.

## Revendications

1. Système d'éclairage (100) comprenant :
un module électroluminescent (101) adapté pour émettre un champ lumineux (103) ayant une uniformité de directionnalité prédéfinie de rayons lumineux individuels dans la capture de rayons lumineux dans le champ lumineux ; et
un élément optique (102) agencé de façon à recevoir une portion du champ lumineux émis par le module électroluminescent et configuré pour fournir en sortie un champ lumineux modifié (104) d'après le champ lumineux reçu ;
dans lequel l'élément optique est agencé séparément par rapport au module électroluminescent et configuré pour modifier le champ lumineux entré dans l'élément optique de sorte qu'un champ lumineux fourni en sortie par l'élément optique ait une uniformité de directionnalité changée de rayons lumineux individuels dans la capture de rayons lumineux dans le champ lumineux fourni en sortie par l'élément optique par rapport au champ lumineux émis par le module électroluminescent ;
dans lequel le module électroluminescent comprend une pluralité de sources lumineuses (108), et dans lequel chaque source lumineuse de la pluralité de sources lumineuses comprend un élément de collimation (109) adapté pour collimater le champ lumineux émis par la source lumineuse,
**caractérisé en ce que** l'élément de collimation (109) de chaque source lumineuse (108) est configuré pour collimater une lumière émise par la source lumineuse (108) de sorte qu'un faisceau de lumière quittant l'élément de collimation (109) présente un angle par rapport à une normale de la surface de sortie (110) qui est dans une plage d'angles prédéfinie de 6° à 45° de sorte que seul un degré limité de collimation soit réalisé par l'élément de collimation.

2. Système d'éclairage selon la revendication 1, dans lequel la portion du champ lumineux émis par le module électroluminescent qui est reçue par l'élément optique est plus petite que la moitié du champ lumineux émis par le module électroluminescent.

3. Système d'éclairage selon la revendication 1 ou 2, dans lequel l'élément optique est agencé de façon à être mobile par rapport au module électroluminescent.

4. Système d'éclairage selon l'une quelconque des revendications 1 à 3, dans lequel l'élément optique est configurable par rapport à une capacité et/ou une aptitude de modification du champ lumineux entré dans l'élément optique.

5. Système d'éclairage selon l'une quelconque des revendications 1 à 4, dans lequel le module électroluminescent est adapté pour émettre un champ lumineux ayant une uniformité de directionnalité de sorte que la différence angulaire entre les directions de rayons lumineux comprenant le champ lumineux soit inférieure à 45°, ou inférieure à 10°.

6. Système d'éclairage selon l'une quelconque des revendications 1 à 5, dans lequel la pluralité de sources lumineuses comprend une pluralité de diodes électroluminescentes, DEL.

7. Système d'éclairage selon l'une quelconque des revendications 1 à 6, dans lequel le module électroluminescent comprend une ou plusieurs diodes électroluminescentes organiques, DELO.

8. Système d'éclairage selon l'une quelconque des revendications 1 à 7, dans lequel l'élément optique comprend au moins un élément de réfraction (105).

9. Système d'éclairage selon l'une quelconque des revendications 1 à 8, dans lequel l'élément optique comprend un élément de sélection de longueur d'onde (106) configuré pour modifier le champ lumineux entré dans l'élément optique de sorte que la répartition de puissance spectrale du champ lumineux soit atténuée par rapport à une longueur d'onde de manière prédéfinie.

10. Système d'éclairage selon l'une quelconque des revendications 1 à 9, dans lequel l'élément optique comprend un élément antireflet (107).

11. Système d'éclairage selon l'une quelconque des revendications 1 à 10, comprenant en outre un moyen de montage (112) adapté pour monter de façon libérable l'élément optique en un emplacement de façon à recevoir la portion du champ lumineux émis par le module électroluminescent.

12. Système d'éclairage selon l'une quelconque des revendications 1 à 11, comprenant en outre une enveloppe (111) qui est agençable de façon libérable sur l'élément optique de façon à entourer au moins partiellement l'élément optique, l'enveloppe étant configurée pour empêcher la lumière d'atteindre l'élément optique lorsque l'enveloppe est agencée sur l'élément optique.
